# EUROPÄISCHE PATENTANMELDUNG

(11) **EP 1 762 756 A2**
(43) Veröffentlichungstag der Anmeldung: **14.03.2007**
(21) Anmeldenummer: 06118772.0
(22) Anmeldetag: 11.08.2006
(51) Int. Cl.: F16J 9/22, F16J 9/26

(54) **Kolbenringpackung**

(30) Priorität: 13.09.2005 EP 05405538
(71) Anmelder: Wärtsilä Schweiz AG, 8401 Winterthur (CH)
(72) Erfinder: Amoser, Dr., Matthias, 8492, Wila (CH)
(74) Vertreter: Ehrsam, Christian

(57) **Zusammenfassung**

Die Erfindung betrifft eine Kolbenringpackung (1) für einen Kolben (2) eines Zweitakt-Grossdieselmotors. Der Kolben (2) ist dabei im Einbauzustand entlang einer Zylinderlauffläche (7) der Zylinderwand (3) eines Zylinders (4) des Zweitakt-Grossdieselmotors hin- und her bewegbar angeordnet, und die Kolbenringpackung (1) umfasst einen einem Brennraum (5) des Zylinders (4) am nächsten gelegenen ersten Kolbenring (K1) mit einer ersten Lauffläche (L1), und einen zweiten Kolbenring (K2) mit einer zweiten Lauffläche (L2). Der erste Kolbenring (K1) ist in einer ersten Kolbenringnut (N1) und der zweite Kolbenring (K2) in einer zweiten Kolbenringnut (N2) des Kolbens (2) derart angeordnet, dass im Betriebszustand die erste Lauffläche (L1) des ersten Kolbenrings (K1) und die zweite Lauffläche (L2) des zweiten Kolbenring (K2) mit der Zylinderwand (3) in reibendem Kontakt stehen. Erfindungsgemäss umfasst dabei sowohl die erste Lauffläche (L1) des ersten Kolbenrings (K1), als auch die zweite Lauffläche (L2) des zweiten Kolbenring (K2) einen Verschleissschutz. Die Erfindung betrifft weiter einen Kolben (2) mit einer solchen Kolbenringpackung (1).

## Beschreibung

Die Erfindung betrifft eine Kolbenringpackung für einen Kolben eines Zweitakt-Grossdieselmotors, sowie einen Kolben mit einer erfindungsgemässen Kolbenringpackung gemäss dem Oberbegriff der unabhängigen Ansprüche 1 und 11.

Die aus dem Stand der Technik bekannten Kolben für einen Grossdieselmotor sind in der Regel mit einer Packung aus mehreren, in jeweils einer Kolbenringnut, übereinander angeordneten Kolbenringen ausgestattet. Typischerweise umfassen die bekannten Kolbenringpackungen mindestens zwei Kolbenringe, meist jedoch drei, vier oder sogar fünf Kolbenringe, je nach Grösse und / oder Leistung des Grossdieselmotors bzw. je nach Anforderungen bzw. den speziellen Betriebsbedingungen, unter denen die Maschine betrieben wird.

Die Kolbenringe, die verschiedene Funktionen erfüllen, wie zum Beispiel die Führung des Kolbens im Zylinder, die Verteilung und / oder Abstreifung eines Schmiermittels auf der Lauffläche des Zylinders, die Abdichtung des Brennraums gegen das Kurbelgehäuse usw., sind im Betriebszustand erheblichen Belastungen ausgesetzt. So stehen die Kolbenringe unmittelbar in reibendem Kontakt mit der Zylinderlauffläche, der Verbrennungsdruck muss von den Kolbenringen aufgenommen werden und die Kolbenringe sind nicht zuletzt erheblichen thermischen, mechanischen und chemischen Belastungen ausgesetzt.

Dabei ist der am stärksten beanspruchte Kolbenring, insbesondere was die Aufnahme des Verbrennungsdrucks angeht, der dem Verbrennungsraum des Zylinders am nächsten gelegene Kolbenring, der häufig auch als "Top-Ring" bezeichnet wird. Bei den aus dem Stand der Technik bekannten Kolbenringen ist dabei jeweils nur der Top-Ring mit einer Verschleissschutzbeschichtung, einer sogeannten "Low-Wear-Beschichtung", an seiner Lauffläche versehen, die zum Beispiel aus einer geeigneten Chrom-Keramik bestehen kann. Die anderen Kolbenringe der Kolbenringpackung haben dagegen keine Verschleissschutzschicht, sondern können als Laufflächen, eine abtragbare Einlaufschicht, eine sogenannte "Running-In-Schicht" aufweisen, die sich in dem Fachmann wohlbekannter Art im Betriebszustand relativ schnell abschleift, so dass der entsprechende Kolbenring nach Abschluss einer Running-In-Phase, also nach Abschluss einer Einlaufphase, optimal im Zylinderliner entlang der Zylinderwand läuft.

Es hat sich dabei gezeigt, dass diese Lösung gewisse Probleme aufwirft. Nach Abschluss der Einlaufphase, wenn also die Einlaufschicht mehr oder weniger abgetragen ist, tritt an der Lauffläche des Kolbenrings, die in reibendem Kontakt mit der Lauffläche der Zylinderwand steht, das Grundmaterial des Kolbenrings zu Tage, das zum Beispiel ein Guss-Material ist, so dass im Betriebszustand das Gussmaterial des Kolbenrings in unmittelbaren Kontakt mit der Zylinderlauffläche tritt, die beispielsweise auch aus einem Gussmaterial besteht. D.h., es kommt im Betriebszustand zu einem reibenden Kontakt zwischen den beiden Gussmaterialien des Kolbenrings und der Zylinderwand, was zu massiven Reibungsverlusten, und im schlimmsten Fall zum sogenannten "Fressen", auch "Scuffing" genannt, führen kann.

Es gibt dabei mehrere Gründe warum bisher im Stand der Technik immer nur der Top-Ring, also der Kolbenring der Kolbenringpackung, der dem Brennraum des Zylinders am nächsten liegt, mit einer Verschleisschutzschicht beschichtet wurde: Einerseits ist der Top-Ring der am stärksten belastete Ring. Nach gängiger Meinung ist man daher davon ausgegangen, dass eine Verschleisschutzbeschichtung des Top-Rings ausreicht, da die darunter gelegenen weiteren Kolbenringe der Kolbenringpackung deutlich weniger belastet schienen und daher eine Beschichtung für überflüssig gehalten wurde. Andererseits ist das Aufbringen der Verschleissschutzbeschichtung relativ aufwendig, insbesondere auch zeitaufwendig und somit teuer, was unter anderem auch darauf zurückzuführen ist, dass die Verschleisschutzbeschichtung sehr genau gearbeitet werden muss, um eine optimale Passung und optimalen Lauf des Kolbenrings im Zylinder zu gewährleisten.

Ausserdem war es gängige Meinung, dass ein mit einer Verschleissschutzschicht versehener Kolbenring, der unter dem Top-Ring liegt, den Schmierfilm auf der Zylinderwand negativ beeinflusst. Der Top-Ring wirkt nämlich bekanntermassen unter anderem auch als Ölabstreifring, das heisst er befördert Schmieröl, das auf die Lauffläche der Zylinderwand aufgebracht ist, vom Brennraum in Richtung zum Kurbelgehäuse weg oder umgekehrt. Dadurch kann einerseits verhindert werden, dass grosse Mengen Schmieröl in den Verbrennungsprozess gelangen. Anderseits wird das Schmieröl durch den als Ölabstreifring wirkenden Top-Ring zu den darunterliegenden Kolbenringen der Kolbenringpackung befördert, so dass deren Schmierung verbessert wird.

Dabei entsteht der Öl abstreifende Effekt des Top-Rings nicht nur durch eine besondere Gestaltung der Form der Lauffläche des Top-Rings, sondern auch aufgrund der besonderen hydrodynamischen und damit zusammenhängend den speziellen tribologischen Verhältnissen, die sich durch das Zusammenspiel der beschichteten Oberfläche mit der aus Guss-Material gefertigten Lauffläche der Zylinderwand ergeben.

Es wurde daher angenommen, dass ein mit einer Verschleissschutzschicht versehener Kolbenring, der unter dem Top-Ring liegt, ebenfalls als Ölabstreifring wirkt und daher nicht nur die Schmierung für die übrigen Kolbenringe der Kolbenringpackung, sondern insbesondere auch die Schmierung des Top-Rings so massiv verschlechtert wird, dass eine deutlich erhöhte Gefahr des Fressens bzw. Scuffing erwartet wurde.

Somit war für den Fachmann klar, dass ein Kolbenring unterhalb des Top-Rings nicht mit einer Verschleissschutzbeschichtung versehen werden darf.

Bei Viertakt-Motoren sind dagegen, wie z.B. in der DE 195 04 803 A1 beschrieben, Kolbenringbeschichtungen auch unterhalb des Top-Rings bekannt. Viertakt-Motoren, wie sie z.B. in Kraftfahrzeugen zum Einsatz kommen, arbeiten nämlich nach einem völlig anderen Schmierprinzip, als dies bei Zweitakt-Grossdieselmoteren der Fall. Bei den bekannten Viertakt-Motoren steht nämlich auf der Zylinderlauffläche nicht nur in ausreichender Menge Schmieröl zur Verfügung, sondern es ist in der Regel sogar Schmieröl im Überfluss auf der Zylinderlauffläche vorhanden, so dass das Schmieröl in grossen Mengen zurück in die Wanne des Kurbelgehäuses abgestreift werden muss.

Es hat sich jedoch gezeigt, dass insbesondere bei modernen Zweitakt-Grossdieselmotoren, bei denen die Tendenz zu immer höheren Leistungen und / oder Leistungsdichten geht, auch die unter dem Top-Ring angeordneten Kolbenringe immer stärkeren Belastungen ausgesetzt sind und insbesondere die Problematik der Reibungsverluste, die nach der Einlaufphase zwischen dem aus Gussmaterial gefertigten Kolbenring und der ebenfalls aus Guss-Material gefertigten Zylinderwand im Betriebszustand auftreten, deutlich unterschätzt wurden.

Die Aufgabe der Erfindung ist es daher, eine verbesserte Kolbenringpackung sowie einen Kolben mit einer solchen Kolbenringpackung vorzuschlagen, der ein deutlich verbessertes Laufverhalten des Kolbens, eine höhere Verschleissfestigkeit, und damit einen wirtschaftlicheren Betrieb eines Zweitakt-Grossdieselmotors, gewährleistet.

Die diese Aufgaben lösenden Gegenstände der Erfindung sind durch die Merkmale der unabhängigen Ansprüche 1 und 11 gekennzeichnet.

Die abhängigen Ansprüche beziehen sich auf besonders vorteilhafte Ausführungsformen der Erfindung.

Die Erfindung betrifft somit eine Kolbenringpackung für einen Kolben eines Zweitakt-Grossdieselmotors. Der Kolben ist dabei im Einbauzustand entlang einer Zylinderwand eines Zylinders des Zweitakt-Grossdieselmotors hin- und her bewegbar angeordnet, und die Kolbenringpackung umfasst einen einem Brennraum des Zylinders am nächsten gelegenen ersten Kolbenring mit einer ersten Lauffläche, und einen zweiten Kolbenring mit einer zweiten Lauffläche. Der erste Kolbenring ist in einer ersten Kolbenringnut und der zweite Kolbenring in einer zweiten Kolbenringnut des Kolbens derart angeordnet, dass im Betriebszustand die erste Lauffläche des ersten Kolbenrings und die zweite Lauffläche des zweiten Kolbenring mit der Zylinderwand in reibendem Kontakt stehen. Erfindungsgemäss umfasst dabei sowohl die erste Lauffläche des ersten Kolbenrings, als auch die zweite Lauffläche des zweiten Kolbenring einen Verschleissschutz.

Wesentlich für die Erfindung ist somit, dass neben dem Top-Ring mindestens noch ein weiterer Kolbenring der Kolbenringpackung, bevorzugt der dem Top-Ring am nächsten liegende Kolbenring einen Verschleissschutz an der Lauffläche des Kolbenrings umfasst.

Überraschender Weise hat sich gezeigt, dass dadurch die tribologischen Verhältnisse und Laufeigenschaften der übrigen Kolbenringe der Kolbenringpackung nicht verschlechtert werden. Ganz im Gegenteil: durch eine geeignete Gestaltung des ebenfalls mit einem Verschleissschutz versehenen Kolbenrings, insbesondere durch eine geeignete Gestaltung der Form der Lauffläche dieses Kolbenrings und / oder der übrigen Kolbenringe bzw. durch eine geeignete Wahl der Anordnung der Kolbenring in der Kolbenringpackung, lassen sich die Laufeigenschaften der Kolbenringpackung insgesamt durch den mit einem Verschleissschutz versehenen, unterhalb des Top-Rings angeordneten Kolbenring massiv verbessern.

In einem speziellen Ausführungsbeispiel ist in der Kolbenringpackung ein dritter Kolbenring mit einer dritten Lauffläche in einer dritten Kolbenringnut vorgesehen, wobei die dritte Lauffläche mit der Zylinderlauffläche der Zylinderwand im Betriebszustand in reibendem Kontakt steht.

Dabei umfasst die zweite Lauffläche und / oder die dritte Lauffläche einen Verschleissschutz und / oder eine Einlaufschicht. So kann zum Beispiel der zweite Kolbenring, der beispielsweise dem ersten Kolbenring, der auch als Top-Ring bezeichnet wird, am nächsten liegt einen Verschleissschutz umfassen, während der dritte Kolbenring und eventuell weitere Kolbenringe der Kolbenringpackung mit einer Einlaufschicht versehen sind. Selbstverständlich kann neben dem zweiten Kolbenring auch der dritte Kolbenring und / oder ein weiterer Kolbenring der Kolbenringpackung ebenfalls einen Verschleissschutz umfassen.

In einem anderen Ausführungsbeispiel ist es auch möglich, dass der dem ersten Kolbenring am nächsten gelegene Kolbenring eine Einlaufschicht umfasst, während ein darunter gelegener dritter und / oder weiterer Kolbenring einen Verschleissschutz umfasst. Das kann insbesondere dann von Vorteil sein, wenn die Belastung, die im Betriebszustand auf den dem ersten Kolbenring am nächsten gelegenen Kolbenring wirkt, eine vorgebbare Belastungsgrenze nicht übersteigt, so dass an diesem Kolbenring auf einen Verschleissschutz verzichtet werden kann. Ein darunter liegender Kolbenring jedoch einen Verschleissschutz aufweist, weil dadurch zum Beispiel der Ölfilm im Bereich der Kolbenringpackung verbessert wird, so dass dadurch die tribologischen und sonstigen Laufeigenschaften der Kolbenringpackung insgesamt optimierbar sind.

In einem speziellen Ausführungsbeispiel einer erfindungsgemässen Kolbenringpackung ist der erste Kolbenring und / oder der zweite Kolbenring und / oder der dritte Kolbenring und / oder ein weiterer Kolbenring aus einem verschleissfesten Material gefertigt. Das heisst, das üblicherweise als Kolbenringmaterial verwendete Gussmaterial kann durch die Zugabe geeigneter Bestandteile bzw. geeigneter Legierungselemente verschleissfest gestaltet werden. Das kann zum Beispiel durch Legierung oder Zugabe der bekannten dazu geeigneten Materialien geschehen, beispielsweise durch Zugabe von Keramiken oder Oxyden, wie Chrom, Chrom-Keramik, Aluminiumoxid, Silikate, Diamantpartikel, insbesondere Tritor, CKS-36, CKS-37, Karbiden, insbesondere Chromkarbid, die dem Fachmann als Verschleissschutzmaterialen, insbesondere für Kolbenringe, wohlbekannt sind. Es versteht sich, dass in speziellen Fällen der Kolbenring insgesamt aus einem verschleissfesten Material gefertigt werden kann, so dass auf das aus dem Stand der Technik bekannte, und für Kolbenringe üblicherweise verwendete Gussmaterial ganz oder teilweise verzichtet werden kann.

In einem für die Praxis besonders wichtigen Ausführungsbeispiel ist der Verschleissschutz eine Verschleisschutzbeschichtung. Dabei kann die Dicke der Verschleisschutzbeschichtung des zweiten Kolbenrings und / oder die Dicke der Verschleissschutzbeschichtung des dritten Kolbenrings und / oder die Dicke der Verschleissschutzbeschichtung des weiteren Kolbenrings 100% der Dicke, im Besonderen nur ¾ der Dicke, bevorzugt nur ½ der Dicke, insbesondere nur 1/3 der Dicke, im Speziellen nur ¼ der Dicke oder maximal 10% der Dicke der Verschleisschutzbeschichtung des ersten Kolbenrings sein.

Dabei kann es besonders vorteilhaft sein, wenn die Dicke der Verschleissschutzbeschichtung des ersten und / oder zweiten und / oder dritten und / oder des weiteren Kolbenrings kleiner als die Dicke der Verschleissschutzbeschichtung des ersten Kolbenrings ist. Da die Belastung des zweiten und die jedes weiteren Kolbenrings in der Regel deutlich kleiner ist, als die Belastungen denen der erste Kolbenring im Betriebszustand ausgesetzt ist, kann in vielen Fällen die Dicke der Verschleissschutzschicht des zweiten, dritten und eventuell weiterer Kolbenrings kleiner gewählt werden, als die Dicke des ersten Kolbenrings. Typische Werte für die Dicke der Verschleissschutzschicht des ersten Kolbenrings sind zum Beispiel 200µm bis 600µm, insbesondere 300µm - 400µm. Die Dicke der Verschleissschutzschciht eines weiteren Kolbenrings, z.B. des zweiten Kolberrings kann dann kleiner gewählt werden, z.B. 10µm - 200µm, im Speziellen 50µm - 100µm.

Die Wahl einer geringeren Dicke für die Verschleissschutzschicht des zweiten und / oder jeden weiteren Kolbenrings ist dabei allein schon aus wirtschaftlichen Erwägungen heraus interessant. Die Verschleissschutzschichten werden nämlich bevorzugt galvanisch oder mittels Laser-gladding aufgebracht, so dass mit steigender Schichtdicke auch entsprechend der notwendige Zeitaufwand für den Schichtaufbau ansteigt.

Dabei versteht sich, dass die Verschleissschutzschicht natürlich auch mit jeder anderen geeigneten Beschichtungsmethode herstellbar ist, also zum Beispiel mit den bekannten thermischen Spritzmethoden, wie HVOF, Plasmaspritzen, Flammspritzen, Pulverspritzen und jeder anderen geeigneten Beschichtungsmethode, wie zum Beispiel schweissen usw..

Dabei kann zum Beispiel der zweite Kolbenring und / oder alle weiteren Kolbenringe einer erfindungsgemässen Kolbenringpackung aus demselben Kolbenring-Rohling hergestellt werden, aus dem auch der erste Kolbenring hergestellt wird. Da der Kolbenring-Rohling in der Regel eine Ringbreite zwischen 5mm und 50mm, bevorzugt eine Breite zwischen 15mm und 30mm aufweist, wird die Gesamtbreite des Kolbenrings durch die Beschichtung im wesentlichen nicht beeinflusst, so dass ein Unterschied in der Dicke der Verschleissschutzbeschichtung von einigen 10µm, bzw. von einigen wenigen 100µm die korrekte Passung des Kolbenrings im Zylinder praktisch nicht beeinflusst.

Bevorzugt ist dabei die Lauffläche des ersten Kolbenrings und / oder des zweiten Kolbenrings und / oder des dritten Kolbenrings und / oder des weiteren Kolbenrings in Richtung zu einer Zylinderlauffläche der Zylinderwand in konvexer Art ausgestaltet.

Dabei kann die Lauffläche des ersten Kolbenrings und / oder des zweiten Kolbenrings und / oder des dritten Kolbenrings und / oder des weiteren Kolbenrings in Richtung zur Zylinderlauffläche in Bezug auf eine Mittelebene des jeweiligen Kolbenrings symmetrisch und / oder asymmetrisch ausgestaltet sein.

In einem für die Praxis besonders wichtigen Ausführungsbeispiel einer erfindungsgemässen Kolbenringpackung ist zum Beispiel der erste Kolbenring, also der Top-Ring, asymmetrisch ausgestaltet und übernimmt die Funktion eines Ölabstreifrings, während die Lauffläche bzw. die Verschleissschutzbeschichtung des zweiten und / oder eines weiteren Kolbenrings der Kolbenringpackung in Bezug auf die Mittelebene des jeweiligen Kolbenrings symmetrisch ausgestaltet ist und eine äussere Begrenzungsfläche der Lauffläche des zweiten oder weiteren Kolbenrings in Richtung zur Zylinderlauffläche beispielsweise konvex, insbesondere in Form eines symmetrischen Kreisausschnitts ausgestaltet ist.

In einem anderen Ausführungsbeispiel kann die Lauffläche des ersten Kolbenrings und / oder des zweiten Kolbenrings und / oder des dritten Kolbenrings und / oder des weiteren Kolbenrings asymmetrisch, insbesondere konvex asymmetrisch in Richtung zum Brennraum hin ausgestaltet ist.

Es versteht sich, dass in einem weiteren Ausführungsbeispiel die Lauffläche des ersten Kolbenrings und / oder des zweiten Kolbenrings und / oder des dritten Kolbenrings und / oder des weiteren Kolbenrings in Richtung zur Zylinderlauffläche in Bezug auf die Mittelebene des Kolbenrings asymmetrisch, insbesondere konvex asymmetrisch, in Richtung vom Brennraum weg ausgestaltet sein kann.

Bevorzugt ist insbesondere der erste Kolbenring in Richtung zum Verbrennungsraum hin oder in Richtung vom Verbrennungsraum weg konvex asymmetrisch ausgestaltet und erfüllt die Funktion eines Ölabstreifrings.

Der Verschleissschutz, das heisst der Kolbenring als solches bzw. die Verschleissschutzbeschichtung, zum Beispiel auf einem Kolbenring aus Guss-Material, kann unter anderem Chrom und / oder Aluminiumoxid und / oder Silikate und / oder Diamantpartikel und / oder Chromkeramik, insbesondere Tritor und / oder CKS-36 und / oder CKS 37 und oder ein Karbid, insbesondere Chromkarbid umfassen. Geeignet sind letztlich alle bekannten Verschleissschutzmaterialien, die vorteilhaft für die Bildung einer Verschleissschutzschicht bzw. für die Herstellung eines Kolbenrings aus einem verschleissfesten Material geeignet sind.

Es versteht sich von selbst, dass die zuvor beschriebenen Beispiele von Ausführungsformen erfindungsgemässer Kolbenringpackungen exemplarisch zu verstehen sind, und insbesondere auch Kolbenringpackungen mit mehr als drei, also mit vier, fünf, sechs oder mehr Kolbenringen umfasst sind, und insbesondere auch alle geeigneten Kombinationen der dargestellten Ausführungsbeispiele von der Erfindung umfasst sind.

Des weiteren betrifft die Erfindung betrifft einen Kolben mit einer Kolbenringpackung, wie sie weiter oben eingehend beschrieben wurde.

Im folgenden wird die Erfindung wird an Hand der Zeichnung näher erläutert. Es zeigen in schematischer Darstellung:
- Fig. 1: einen Zylinder eines Zweitakt-Grossdieselmotors mit einer erfindungsgemässen Kolbenringpackung;
- Fig. 2: ein Ausführungsbeispiel einer erfindungsgemässen Kolbenringpackung;
- Fig. 3a: Kolbenring mit konvex asymmetrischer Lauffläche;
- Fig. 3b: ein weiteres Ausführungsbeispiel gem. Fig. 3a;
- Fig. 3c: Kolbenring mit konvex symmetrischer Lauffläche;
- Fig. 4: ein weiteres Beispiel einer erfindungsgemässen Kolbenringpackung.

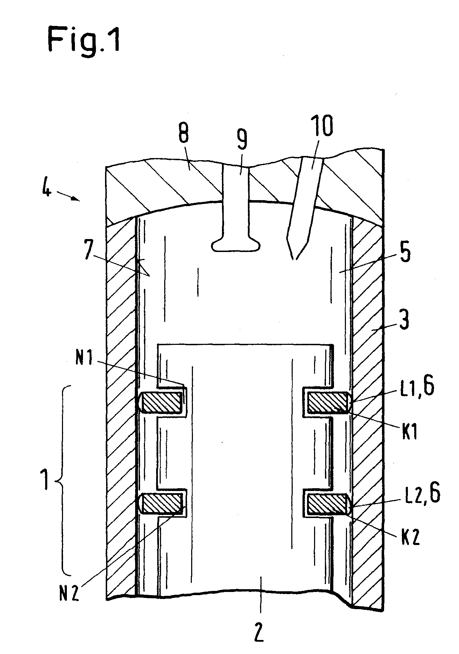

Fig. 1 zeigt in einer schematischen Darstellung teilweise im Schnitt einen Zylinder eines Zweitakt-Grossdieselmotors mit einer erfindungsgemässen Kolbenringpackung, die im folgenden gesamthaft mit dem Bezugszeichen 1 bezeichnet wird.

Im Zylinder 4 ist in bekannter Weise ein Kolben 2 vorgesehen, der entlang einer Zylinderlauffläche 7 einer Zylinderwand 3 hin- und her bewegbar angeordnet ist. Der Kolben 2, die Zylinderwand 3 und ein Zylinderdeckel 8 begrenzen einen Brennraum 5 des Zylinders 4. Im Zylinderdeckel 8 ist ein Auslassventil 9 zum Auslassen von Verbrennungsgasen und ein Einspritzventil 10 zum Einspritzen von Treibstoff vorgesehen. Am Kolben 2 ist eine erfindungsgemässe Kolbenringpackung 1 aus mehreren Kolbenringen vorgesehen, wobei aus Gründen Übersichtlichkeit in Fig.1 nur zwei Kolbenringe, nämlich der erste Kolbenring K1 und der zweite Kolbenring K2 dargestellt sind. Der Kolbenring K1, der dem Brennraum 5 am nächsten liegt, wird häufig auch als Top-Ring bezeichnet und ist in der Kolbenringnut N1 vorgesehen, während der zweite Kolbenring K2 darstellungsgemäss unterhalb des ersten Kolbenrings K1 in der Kolbenringnut N2 angeordnet ist.

Es versteht sich, dass wenn im Rahmen dieser Anmeldung von einem zweiten Kolbenring K2 die Rede ist, dieser Kolbenring K2 nicht zwangsläufig derjenige Kolbenring ist, der dem ersten Kolbenring K1 am nächsten liegt. Vielmehr ist es in bestimmten Fällen durchaus möglich, dass zwischen dem ersten Kolbenring K1 und dem zweiten Kolbenring K2 ein oder mehrere Kolbenringe angeordnet sind, so dass im Speziellen der zweite Kolbenring K2 auch der unterste Kolbenring einer Kolbenringpackung 1 sein kann, also der vom ersten Kolbenring K1 am weitesten entfernte Kolbenring sein kann.

Bei dem in Fig. 1 dargestellten speziellen Ausführungsbeispiel ist der erste Kolbenring K1 und der zweite Kolbenring K2 in an sich bekannter Weise aus einem Guss-Material gefertigt und sowohl der erste Kolbenring K1, als auch der zweite Kolbenring K2 sind mit einer Verschleissschutzbeschichtung 6 versehen, die in konvexer Art ausgestaltet ist und sich somit in konvexer Form in Richtung zur Zylinderlauffläche 7 erstreckt, wobei im Betriebszustand des Zweitakt-Grossdieselmotors die als Laufflächen L1, L2 ausgestalteten Verschleissschutzbeschichtungen 6 der Kolbenringe K1, K2 mit der Zylinderlauffläche 7 des Zylinders 4 in reibendem Kontakt stehen.

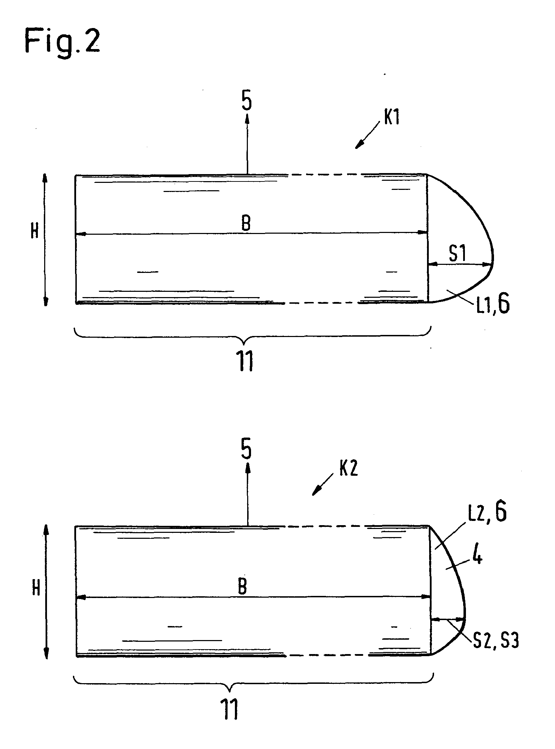

In Fig. 2 ist ein spezielles Ausführungsbeispiel einer erfindungsgemässen Kolbenringpackung 1 dargestellt, wobei auf die Darstellung des Kolbens 2 und des Zylinders 4 zur besseren Übersicht verzichtet wurde.

Dargestellt ist der erste Kolbenring K1, der dem Brennraum 5 am nächsten liegt, wobei die Lage des Brennraums 5 in Bezug auf die Kolbenringe K1, K2, K3 durch die mit dem Bezugszeichen 5 gekennzeichneten Pfeile angedeutet ist. Der erste Kolbenring K1 und der zweite Kolbenring K2 sind aus zwei im wesentlichen identischen Kolbenring-Rohlingen 11 oder Kolbenringkörpern 11 der Höhe H und der Breite B, bestehend aus einem an sich bekannten Guss-Material gefertigt. Sowohl der erste Kolbenring K1, als auch der zweite Kolbenring K2 sind jeweils an der ersten Lauffläche L1 und an der zweiten Lauffläche L2 mit einer Verschleissschutzbeschichtung 6 versehen, wobei die Verschleisschutzbeschichtung 6 des ersten Kolbenrings K1 die Dicke S1 und die Verschleissschutzbeschichtung 6 des zweiten Kolbenrings K2 die Dicke S2 hat. Dabei ist die Breite B der Kolbenringkörper 11 der Kolbenringe K1, K2, gross gegen die Dicke S1, S2 der Verschleissschutzbeschichtungen 6. Zum Beispiel kann die Breite B der Kolbenringkörper 11 zum Beispiel 25mm betragen, während die Dicke S1 der Verschleissschutzschicht 6 des ersten Kolbenrings K1 beispielsweise 350µm beträgt, während die Dicke S2 der Verschleisschutzschicht 6 des zweiten Kolbenrings K2 nur 75µm betragen kann. Bei dem in Fig. 2 gezeigten Beispiel ist die erste Lauffläche L1 des ersten Kolbenrings K1 und die zweite Lauffläche L2 des zweiten Kolbenrings K2 in Richtung zu einer in Fig. 2 nicht dargestellten Zylinderlauffläche 7 in Bezug auf eine Mittelebene der Kolbenringe konvex asymmetrisch, in Richtung vom Brennraum 5 weg ausgestaltet.

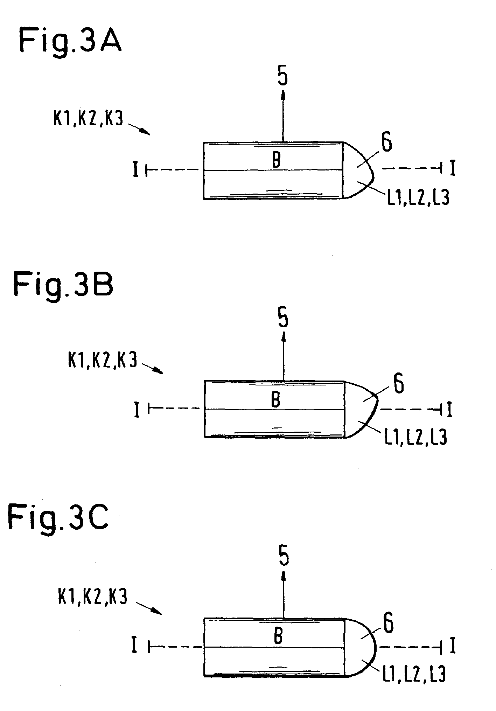

In den Fig. 3a, 3b und 3c sind drei spezielle Ausführungsformen von in konvexer Art ausgestalteten Verschleissschutzbeschichtungen 6 eines Kolbenrings K1, K2, K3 mit Breite B dargestellt. Es versteht sich, dass natürlich auch der Kolbenring selbst, der keine Verschleissschutzbeschichtung 6 trägt, und zum Beispiel als ganzes aus einem verschleissfesten Material aufgebaut ist, an seiner Lauffläche gemäss den exemplarischen Beispielen der Figuren der Zeichnung ausgestaltet sein kann.

In den Fig. 3a und Fig. 3b ist jeweils ein konvex asymmetrisches Ausführungsbeispiel einer Kolbenlauffläche L1, L2, L3 dargestellt. Das Ausführungsbeispiel gemäss Fig. 3a zeigt ein in Richtung zu einer nicht dargestellten Zylinderlauffläche 7 hin, in Bezug auf die Mittelebene I-I und in Richtung vom Brennraum 5 weg konvex asymmetrisches Ausführungsbeispiel einer Lauffläche L1, L2, L3, während in Fig. 3b ein in Richtung zu einer nicht dargestellten Zylinderlauffläche 7 hin, in Bezug auf die Mittelebene I-I und in Richtung zum Brennraum 5 hin konvex asymmetrisches Ausführungsbeispiel einer Lauffläche L1, L2, L3 dargestellt ist.

Fig. 3c zeigt schliesslich ein für die Praxis besonders wichtiges Beispiel, bei welchem in Richtung zu einer nicht dargestellten Zylinderlauffläche 7 hin, in Bezug auf die Mittelebene I-I symmetrisches Ausführungsbeispiel einer Lauffläche L1, L2, L3 gezeigt ist. Diese Ausführungsform kommt bevorzugt für Laufflächen L2, L3 des zweiten Kolbenrings K2 und / oder des dritten Kolbenrings K3 und / oder des weiteren Kolbenrings in Frage.

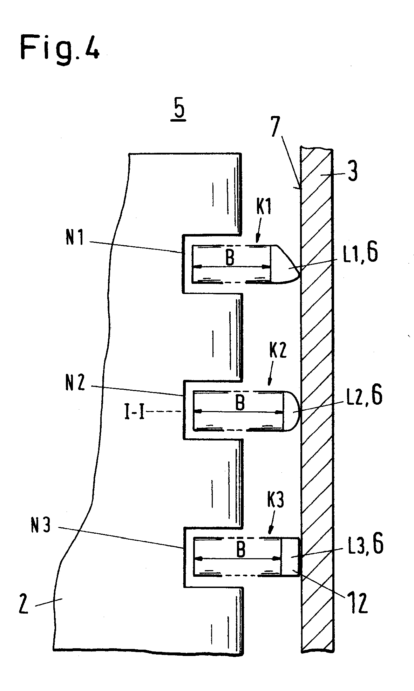

In Fig. 4 ist schliesslich ein weiteres, für die Praxis besonders wichtiges Ausführungsbeispiel einer erfindungsgemässen Kolbenringpackung teilweise und im Schnitt schematisch dargestellt.

Der in Fig. 4 dargestellte Kolben 2 weist mindestens die drei Kolbenringnuten N1, N2 und N3 auf, die jeweils den ersten Kolbenring K1, den zweiten Kolbenring K2 und den dritten Kolbenring K3 aufnehmen. Die Laufflächen L1, L2 und L3 der Kolbenringe K1, K2, K3 stehen dabei im Betriebszustand in reibenden Kontakt mit der Zylinderlauffläche 7 der Zylinderwand 3 eines nur andeutungsweise in Fig. 4 dargestellten Zylinders 4.

Der erste Kolbenring K1, also der dem Brennraum 5 am nächsten gelegene Kolbenring, ist ebenso wie der Kolbenring K2, der im vorliegenden Beispiel dem Kolbenring K1 unmittelbar, und darstellungsgemäss unterhalb von K1, benachbart ist, mit einer Verschleissschutzschicht 6 versehen. Der dritte Kolbenring K3, der aufgrund seiner Anordnung in der Kolbenringnut N3 deutlich weniger belastet ist als der erste Kolbenring K1 und der zweite Kolbenring K2, ist mit einer an sich bekannten Einlaufschicht 12 versehen, die somit die Lauffläche L3 des dritten Kolbenrings K3 bildet.

Der erste Kolbenring K1 ist dabei in konvex asymmetrischer Form an der Lauffläche L1 ausgebildet und erfüllt unter anderem die Funktion als Ölabstreifring in an sich bekannter Weise. Der zweite Kolbenring K2 ist dagegen in konvex symmetrischer Art ausgebildet, das heisst in Bezug auf die Mittelebene I-I ist die Lauffläche L2 des Kolbenrings K2 symmetrisch ausgebildet, wodurch eine besonders vorteilhafte und gleichmässige Verteilung des Ölfilms im Bereich der Kolbenringpackung 1 erreichbar ist, wodurch insbesondere eine optimale Schmierung des Kolbenrings K1 gewährleistet ist.

## Patentansprüche

1. Kolbenringpackung für einen Kolben (2) eines Zweitakt-Grossdieselmotor, welcher Kolben (2) im Einbauzustand entlang einer Zylinderwand (3) eines Zylinders (4) des Zweitakt-Grossdieselmotors hin- und her bewegbar angeordnet ist, und wobei die Kolbenringpackung (1) einen einem Brennraum (5) des Zylinders (4) am nächsten gelegenen ersten Kolbenring (K1) mit einer ersten Lauffläche (L1), und einen zweiten Kolbenring (K2) mit einer zweiten Lauffläche (L2) umfasst, und der erste Kolbenring (K1) in einer ersten Kolbenringnut (N1) und der zweite Kolbenring (K2) in einer zweiten Kolbenringnut (N2) des Kolbens (2) derart angeordnet ist, dass im Betriebszustand die erste Lauffläche (L1) des ersten Kolbenrings (K1) und die zweite Lauffläche (L2) des zweiten Kolbenring (K2) mit einer Zylinderlauffläche (7) der Zylinderwand (3) in reibendem Kontakt stehen, **dadurch gekennzeichnet, dass** die erste Lauffläche (L1) des ersten Kolbenrings (K1) und die zweite Lauffläche (L2) des zweiten Kolbenring (K2) einen Verschleissschutz umfasst.

2. Kolbenringpackung nach Anspruch 1, wobei mindestens ein dritter Kolbenring (K3) mit einer dritten Lauffläche (L3) in einer dritten Kolbenringnut (N3) vorgesehen ist, und die dritte Lauffläche (L3) mit der Zylinderlauffläche (7) der Zylinderwand (3) im Betriebszustand in reibendem Kontakt steht.

3. Kolbenringpackung nach Anspruch 1 oder 2, wobei die zweite Lauffläche (L2) und / oder die dritte Lauffläche (L3) einen Verschleissschutz und /oder eine Einlaufschicht (12) umfasst.

4. Kolbenringpackung nach einem der vorangehenden Ansprüche, wobei der erste Kolbenring (K1) aus einem Verschleissfesten Material gefertigt ist

5. Kolbenringpackung nach einem der vorangehenden Ansprüche, wobei der zweite Kolbenring (K2) aus einem Verschleissfesten Material gefertigt ist.

6. Kolbenringpackung nach einem der vorangehenden Ansprüche, wobei der dritte Kolbenring (K3) und / oder ein weiterer Kolbenring aus einem Verschleissfesten Material gefertigt ist.

7. Kolbenringpackung nach einem der vorangehenden Ansprüche, wobei der Verschleissschutz eine Verschleisschutzbeschichtung (6) ist.

8. Kolbenringpackung nach einem der vorangehenden Ansprüche, wobei die Dicke (S2) der Verschleisschutzbeschichtung (6) des zweiten Kolbenrings (K2) und / oder die Dicke (S3) der Verschleissschutzbeschichtung (6) des dritten Kolbenrings (K3) und / oder die Dicke der Verschleissschutzbeschichtung des weiteren Kolbenrings 100% der Dicke (S1), im Besonderen nur ¾ der Dicke (S1), bevorzugt nur ½ der Dicke (S1), insbesondere nur 1/3 der Dicke (S1), im Speziellen nur ¼ der Dicke (S1) oder maximal 10% der Dicke (S1) der Verschleisschutzbeschichtung (6) des ersten Kolbenrings (K1) ist.

9. Kolbenringpackung nach einem der vorangehenden Ansprüche, wobei die Lauffläche (L1, L2, L3) des ersten Kolbenrings (K1) und / oder des zweiten Kolbenrings (K2) und / oder des dritten Kolbenrings (K3) und /oder des weiteren Kolbenrings in Richtung zu der Zylinderlauffläche (7) der Zylinderwand (3) in konvexer Art ausgestaltet ist.

10. Kolbenringpackung nach einem der vorangehenden Ansprüche, wobei die Lauffläche (L1, L2, L3) des ersten Kolbenrings (K1) und / oder des zweiten Kolbenrings (K2) und / oder des dritten Kolbenrings (K3) und /oder des weiteren Kolbenrings in Richtung zur Zylinderlauffläche (7) in Bezug auf eine Mittelebene (I-I) des jeweiligen Kolbenrings (K1, K2, K3) symmetrisch und / oder asymmetrisch ausgestaltet ist.

11. Kolbenringpackung nach einem der vorangehenden Ansprüche, wobei die Lauffläche des ersten Kolbenrings (K1) und / oder des zweiten Kolbenrings (K2) und / oder des dritten Kolbenrings (K3) und / oder des weiteren Kolbenrings asymmetrisch, insbesondere Konvex asymmetrisch, in Richtung zum Verbrennungsraum (5) hin ausgestaltet ist.

12. Kolbenringpackung nach einem der vorangehenden Ansprüche, wobei die Lauffläche des ersten Kolbenrings (K1) und / oder des zweiten Kolbenrings (K2) und / oder des dritten Kolbenrings (K3) und / oder des weiteren Kolbenrings in Richtung zur Zylinderlauffläche (7) in Bezug auf die Mittelebene (I-I) des Kolbenrings (K1, K2, K3) asymmetrisch, insbesondere konvex asymmetrisch, in Richtung vom Verbrennungsraum (5) weg ausgestaltet ist.

13. Kolbenringpackung nach einem der vorangehenden Ansprüche, wobei der Verschleisschutz Chrom und / oder Aluminiumoxid und / oder Silikate und / oder Diamantpartikel und / oder Chromkeramik, insbesondere Tritor und / oder CKS-36 und / oder CKS 37 und / oder ein Karbid, insbesondere Chromkarbid umfasst.

14. Kolben mit einer Kolbenringpackung nach einem der vorangehenden Ansprüche.
